# EUROPÄISCHE PATENTSCHRIFT

(11) **EP 1 249 649 B1**
(45) Veröffentlichungstag und Bekanntmachung des Hinweises auf die Patenterteilung: **25.08.2004**
(21) Anmeldenummer: 02007633.7
(22) Anmeldetag: 04.04.2002
(51) Int. Cl.: F16K 27/04

(54) **Wasserarmatur**
Sanitary fitting
Robinetterie sanitaire

(30) Priorität: 10.04.2001 DE 10117992
(43) Veröffentlichungstag der Anmeldung: 16.10.2002
(73) Patentinhaber: Grohe Water Technology AG & Co. KG, 58675 Hemer (DE)
(72) Erfinder: Rüth, Andreas, 58675 Hemer (DE); Günther, Michael, 58636 Iserlohn (DE)

(56) Entgegenhaltungen:
- EP-A- 0 942 210
- EP-A- 0 985 773
- DE-A- 3 513 840
- DE-A- 4 308 746
- DE-A- 19 639 320

## Beschreibung

Die Erfindung betrifft eine Wasserarmatur mit einem Gehäuse, das unten zum Durchlassen mindestens einer Anschlussleitung und eines Gewindebolzens eine Öffnung aufweist, an der eine Auflage ausgebildet ist, wobei
- eine im Gehäuse angeordnete Kartusche vorgesehen ist, die Ventilelemente enthält,
- ein im Gehäuse angeordnetes, als separates Teil ausgebildetes, mit der Oberseite an der Unterseite der Kartusche anliegendes, mit seinem unteren Bereich auf der Auflage aufliegendes Bodenteil vorgesehen ist, in dem
   -- Bohrungen ausgebildet sind, in die mindestens eine Anschlussleitung eingesetzt ist, und mit jeweils einem Verbindungskanal von der Anschlussleitung zur Kartusche versehen sind,
   -- ein Gewindebolzen drehfest mit einem verdickten Endbereich gehalten ist, mit dem die Wasserarmatur an einem Gegenstand befestigbar ist.

Eine solche Wasserarmatur ist in der Druckschrift DE 35 13 840 A1 beschrieben. Der Gewindebolzen wird hierbei von einer in einen Radialschlitz des Bodenteils eingeschobenen Gewindemutter gehalten, die als verdicktes Endteil des Gewindebolzens wirkt.
Diese Anordnung des Gewindebolzens erfordert jedoch schon aus Festigkeitsgründen ein Bodenteil aus Metall oder hochwertigem Kunststoff, was relativ kostenaufwendig ist.

Der Erfindung liegt die Aufgabe zu Grunde, die im Oberbegriff des Anspruchs 1 angegebene Wasserarmatur zu verbessern, insbesondere den Gewindebolzen im Bodenteil so anzuordnen, dass auch bei dem Einsatz von preiswerten weniger festen Kunststoffwerkstoffen für das Bodenteil der Gewindebolzen sicher gehalten ist.

Diese Aufgabe wird erfindungsgemäß von einer Wasserarmatur mit den im Anspruch 1 angegebenen Merkmalen gelöst.
Weitere Ausgestaltungen der Erfindung sind in den Ansprüchen 2 bis 13 angegeben.

Die mit der Erfindung erzielbaren Vorteile bestehen insbesondere darin, dass mit der vorgeschlagenen Anordnung des Gewindebolzens dieser mit seinem verdickten Endbereich an der Auflage des metallenen Gehäuses der Wasserarmatur aufliegt und dadurch hohen Zugbelastungen standhält, wie sie bei einer Befestigung der Wasserarmatur an einem Gegenstand, z. B. einem Waschtisch, auftreten können. Im Bodenteil erfolgt hierbei lediglich eine Führung des verdickten Teils des Gewindebolzens, ohne dass die Zugbelastungen an dem Bodenteil abgegeben werden.

Bei der erfindungsgemäßen Ausbildung kann der verdickte Endbereich des Gewindebolzens sowohl als einstückiger Bolzenkopf als auch als Gewindemutter, in die der Gewindebolzen einschraubbar ist, ausgebildet sein.
Zweckmäßig kann in dem Bodenteil eine Rasteinrichtung vorgesehen werden, mit der der Gewindebolzen in der Stecklage im Bodenteil sicherbar ist, so dass bei der Einmontage des Bodenteils mit dem Gewindebolzen in das Gehäuse der Wasserarmatur ein Herausfallen des Gewindebolzens sicher vermieden wird.

In weiterer Ausgestaltung der Erfindung kann das Bodenteil vorteilhaft zweiteilig ausgebildet werden, wobei das Unterteil des Bodenteils neben der Öffnung für den verdickten Teil des Gewindebolzens wenigstens eine, vorzugsweise zwei Bohrungen für die Aufnahme der Anschlussleitungen aufweist und die Anschlussleitungen mit jeweils einem Umfangsbund an der stromabwärts gelegenen Stirnseite des Unterteils zur Axialsicherung anliegen. Die Anschlussleitungen greifen dabei jeweils mit ihrem stromabwärts gelegenen Ende in eine, mit einem Verbindungskanal zur Ventilkartusche verbundenen Stufenbohrung des Oberteils des Bodenteils ein, wobei mit jeweils einer Dichtung die Abdichtung zwischen dem Oberteil und dem jeweiligen Anschlussrohr hergestellt wird.
Damit das Unterteil und das Oberteil mit den Anschlussleitungen und dem Gewindebolzen vormontiert werden können, so dass sie als Baueinheit in das Gehäuse der Wasserarmatur einsetzbar sind, kann vorteilhaft eine Rastverbindung zwischen dem Oberteil und dem Unterteil des Bodenteils vorgesehen werden.
Zweckmäßig kann hierbei der verdickte Endbereich des Gewindebolzens als Gewindemutter vorgesehen werden, die einerseits mit ihrem Sechskantprofil von einer entsprechenden Halteöffnung mit axialen Anschlagnasen im Unterteil aufgenommen ist, während die Gewindemutter andererseits mit einem im Durchmesser verringerten zylindrischen Ansatz in eine Aufnahmebohrung des Oberteils des Bodenteils einfasst, wobei in der Aufnahmebohrung ein oder mehrere federnde Zungen mit Rastnasen ausgebildet sind, die in der zusammengefügten Position in eine an der zylindrischen Mantelfläche des Ansatzes ausgebildete Ringnut einfassen, so dass das Unterteil und das Oberteil zusammen mit der Gewindemutter miteinander verrastet werden.
Ergänzend oder alternativ kann außerdem die Verrastung der beiden Bodenteile mit einem an dem einen der beiden Teile ausgebildeten Zapfen mit federnden Rastelementen erfolgen, wobei dieser Zapfen bei der Zusammenmontage in eine Bohrung des anderen Teils in der zusammengefügten Stellung einrastet.

Der jeweilige Umfangsbund an den Anschlussleitungen kann hierbei sowohl einstückig, wie es bei aus Kupfer hergestellten Anschlussleitungen üblich ist, als auch als separater geschlitzter Sprengring, der in eine Ringnut eines Steckerteils in der Steckposition einer als Schlauch ausgebildeten Anschlussleitung einsetzbar ist, ausgebildet sein. Hierbei greift das Unterteil mit konzentrisch zu den Bohrungen ausgebildeten zylindrischen Ansätzen in die jeweilige Stufenbohrung des Oberteils in der zusammengefügten Stellung des Bodenteils ein, so dass der separate Sprengring von der Stufenbohrung radial verriegelt ist.

Die erfindungsgemäße Ausbildung kann sowohl bei einem Mischventil als auch bei einem Absperr- und/oder Umschaltventil eingesetzt werden.

Ein Ausführungsbeispiel der Erfindung ist in der beigefügten Zeichnung dargestellt und wird nachfolgend beschrieben. In ihr zeigen die
- Fig. 1: eine als Eingriffmischventil ausgebildete Wasserarmatur in der Schnittebene I der Fig. 2;
- Fig. 2: die in Fig. 1 gezeigte Wasserarmatur in der Schnittebene II;
- Fig. 3: die in Fig. 2 gezeigte Wasserarmatur in der Schnittebene III;
- Fig. 4: das in Fig. 1 gezeigte Bodenteil mit Anschlussleitungen und Gewindebolzen in Seitenansicht, teilweise geschnitten in vergrößerter Darstellung;

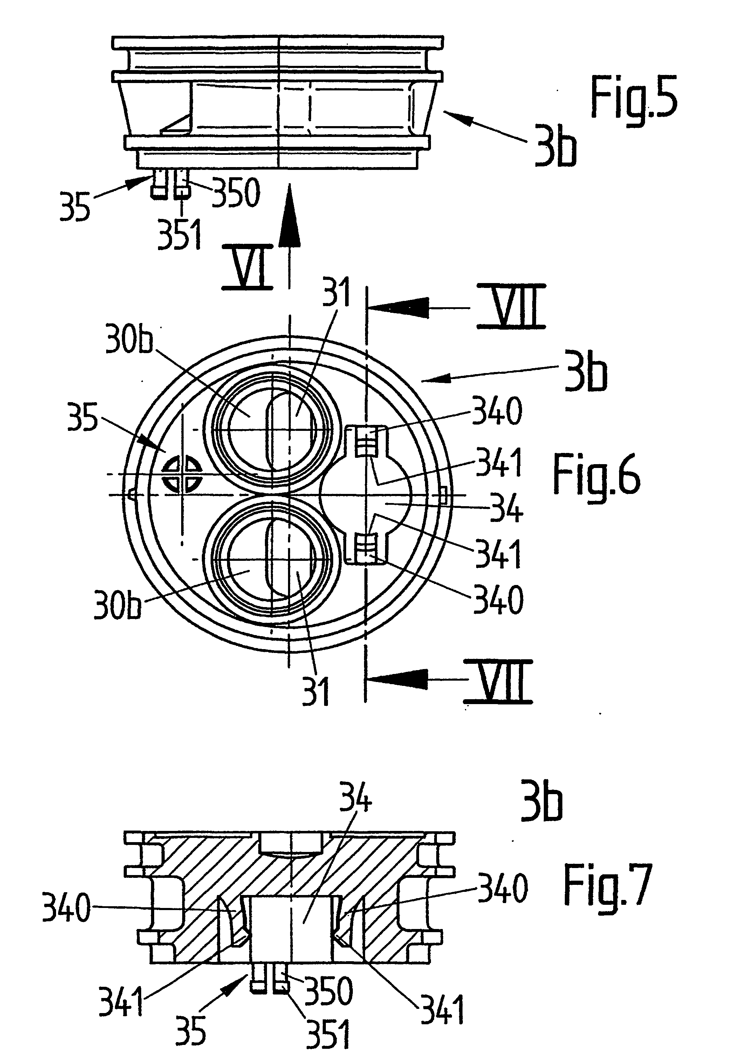

- Fig. 5: das in Fig. 4 gezeigte Oberteil des Bodenteils in Seitenansicht;
- Fig. 6: das Oberteil gemäß Fig. 5 in der Ansicht VI;
- Fig. 7: das in Fig. 6 gezeigte Oberteil in der Schnittebene VII;
- Fig. 8: das in Fig. 4 gezeigte Unterteil des Bodenteils in Seitenansicht;
- Fig. 9: das in Fig. 8 gezeigte Unterteil in Draufsicht;
- Fig. 10: das in Fig. 9 gezeigte Unterteil um 180° gedreht;
- Fig. 11: die in Fig. 4 gezeigte Gewindemutter in Seitenansicht;
- Fig. 12: die in Fig. 11 gezeigte Gewindemutter in Draufsicht.

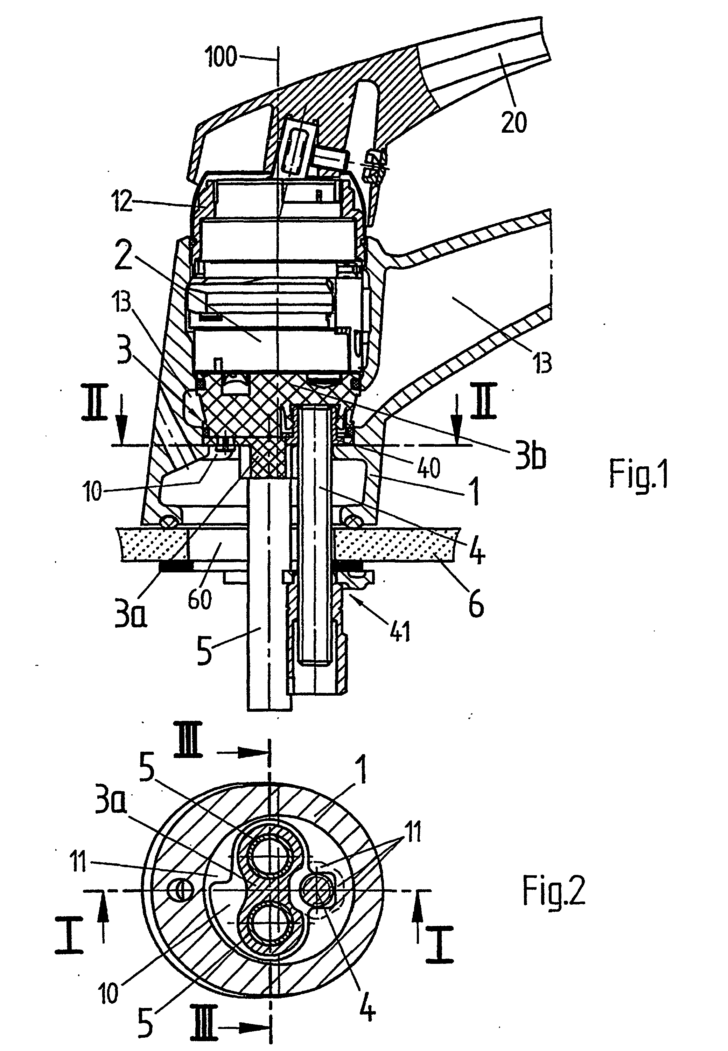

Die in Fig. 1 gezeigte Wasserarmatur ist als Eingriffmischventil augebildet und auf einem zum Teil dargestellten Wasch- und/oder Spültisch 6 befestigt. Das Eingriffmischventil ist dabei mit einem Gehäuse 1 aus Metall, vorzugsweise aus Messing, versehen, in dem ein konzentrisch zu einer vertikalen Achse 100 angeordneter Aufnahmeraum für ein Bodenteil 3 und eine bekannte Kartusche 2, in der einzelne Ventilelemente angeordnet sind, ausgebildet ist. Das Gehäuse 1 weist im unteren Bereich eine Öffnung 10 auf, durch die Anschlussleitungen 5 für Kalt- und Warmwasser sowie ein Gewindebolzen 4, der für die Befestigung des Gehäuses 1 an einem Wasch- und/oder Spültisch 6 vorgesehen ist, hindurchgeführt sind. Das Bodenteil 3 mit der Kartusche 2 ist hierbei von einer im oberen Bereich des Gehäuses 1 angeordneten Schraubkappe 12 gegen eine Auflage 11 im Bereich der Öffnung 10 des Gehäuses 1 verspannt. Mit einem an der oberen Stirnseite der Kartusche 2 ausgebildeten Handgriff 20 kann in einem ersten Freiheitsgrad durch eine Drehbewegung um die Achse 100 das Mischungsverhältnis des zufließenden Kalt- und Warmwassers eingestellt werden, während in einem zweiten Freiheitsgrad durch ein Auf- oder Abschwenken des Handgriffs 20 die Gesamtausflussmenge des über einem am Gehäuse 1 einstückig ausgebildeten Auslaufrohr 13 abzugebenden Wassers einstellbar ist.
Die Anschlussleitungen 5 sowie der Gewindebolzen 4 sind hierbei durch eine Öffnung 60 im Wasch- und/oder Spültisch 6 hindurchgeführt, wobei zur Befestigung des Gehäuses 1 von der Unterseite des Wasch- und/oder Spültisches 6 eine bekannte Spanneinrichtung 41 auf dem Gewindebolzen 4 aufgeschraubt ist und von unten gegen die Stirnfläche des Wasch- und/oder Spültisches 6 verspannt ist.

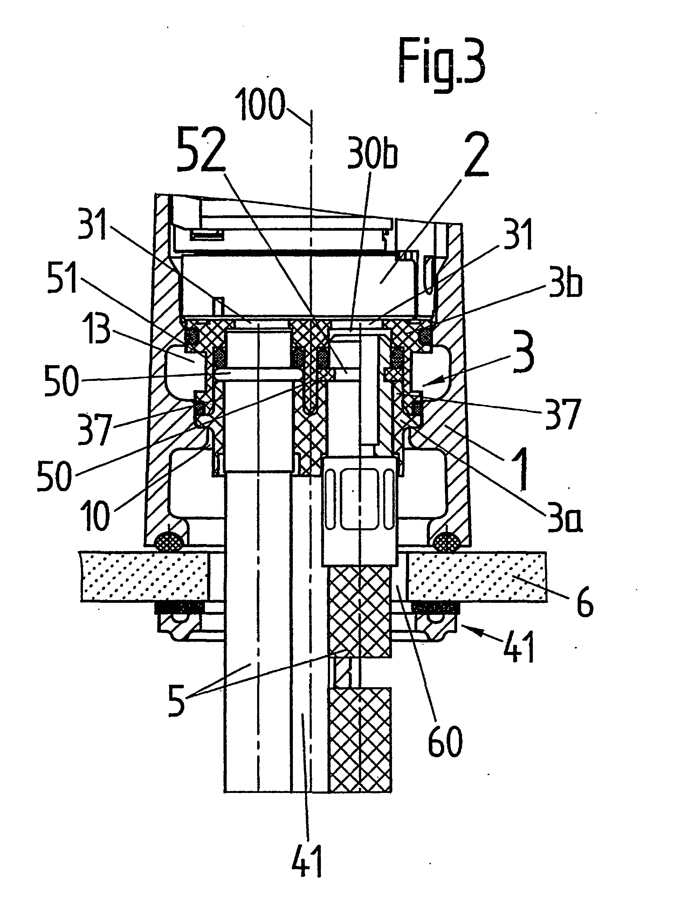

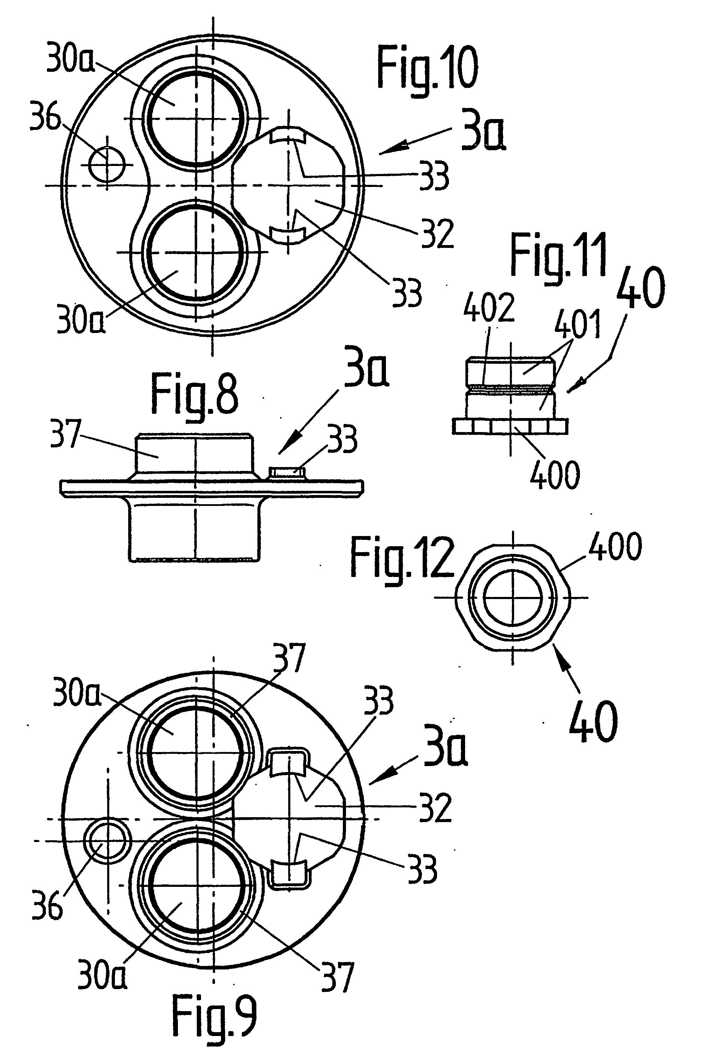

Das Bodenteil 3 ist zweiteilig aus Kunststoff hergestellt, wobei ein Unterteil 3a mit einem Oberteil 3b zu einer Baueinheit verbindbar ist.
Das Unterteil 3a ist als flanschartige Scheibe ausgebildet, wie es insbesondere aus Fig. 8 bis 10 ersichtlich ist, wobei zwei parallel zueinander angeordnete Bohrungen 30a für die Aufnahme der Anschlussleitungen 5 vorgesehen sind. Die Anschlussleitungen 5 weisen hierbei einen radial vorstehenden Umfangsbund 50 auf, mit dem sie an der stromabwärts gelegenen Stirnseite bei der Einmontage zur Axialsicherung anliegen, wie es insbesondere aus Fig. 3 der Zeichnung ersichtlich ist.

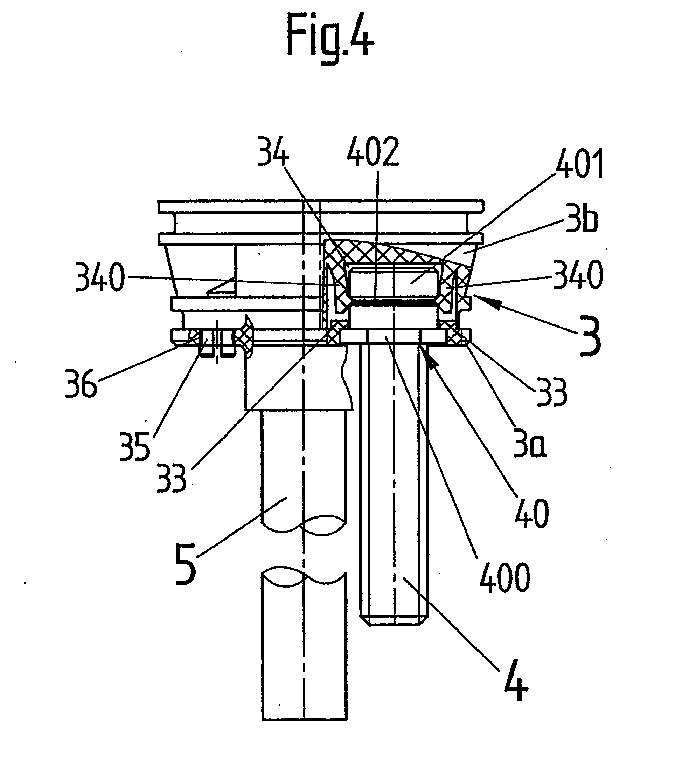

In der linken Bildhälfte ist hierbei als erstes Ausführungsbeispiel die Anschlussleitung 5 aus Kupfer hergestellt, wobei der Umfangsbund 50 einstückig an dem Kupferrohr angebörtelt ist. In der rechten Bildhälfte ist als zweites Ausführungsbeispiel die Anschlussleitung 5 als Schlauchleitung ausgebildet, die mit einem Steckerteil in die Bohrung 30a eingeführt ist, wobei am Steckerteil eine Ringnut 52 ausgebildet ist, in die ein als geschlitzter Sprengring ausgebildeter Umfangsbund 50 einsprengbar ist und dadurch die axiale Sicherung im Bodenteil 3 bewerkstelligt. Bei der Ausbildung mit dem separaten Sprengring wird es ermöglicht, die Anschlussleitung 5 von unten einzuführen und danach den Sprengring zur Axialsicherung aufzubringen, während mit der einstückigen Ausbildung des Umfangsbunds 50 an der Anschlussleitung 5 aus Kupfer die gesamte Anschlussleitung 5 von oben durch die Bohrung 30a hindurchgeführt werden muss bis zur Anlage des Umfangsbunds 50 an der stromabwärts gelegenen Stirnseite des Unterteils 3a.
Entsprechend zu den Bohrungen 30a sind in dem Oberteil 3b Stufenbohrungen 30b angeordnet, die jeweils in einen Verbindungskanal 31 zur Kartusche 2 münden. Von dem stromabwärts gelegenen, verengten Bereich der Stufenbohrung 30b ist jeweils das Endstück der Anschlussleitung 5 aufgenommen. In dem erweiterten Bereich der Stufenbohrung 30b ist der Umfangsbund 50 sowie jeweils ein Dichtring 51 zur Abdichtung zwischen der Anschlussleitung 5 und der Wandung der Stufenbohrung 30b vorgesehen. Der Dichtring 51 ist hierbei jeweils von dem Umfangsbund 50 axial abgestützt, wie es insbesondere aus Fig. 3 der Zeichnung ersichtlich ist. Darüber hinaus ist das Unterteil 3a mit zylindrischen Ansätzen von den Stufenbohrungen 30b aufgenommen, so dass auch bei dem Einsatz eines geschlitzten separaten Sprengrings als Umfangsbund 50 dieser in der Stecklage radial von der Innenwandung der Stufenbohrung verriegelt wird.
Parallel neben den Anschlussleitungen 5 ist in einer Halteöffnung 32 des Unterteils 3a eine Gewindemutter 40 als verdickter Endbereich des Gewindebolzens 4 vorgesehen. Die Gewindemutter 40 weist im unteren Bereich ein Polygon-Profil in Form eines Sechskants 400 auf, der von der entsprechend ausgebildeten Halteöffnung 32 aufgenommen ist. Zur Begrenzung der Einschiebtiefe sind hierbei an dem Unterteil 3a Anschlagnasen 33 angeformt, so dass die Eintauchtiefe der Gewindemutter 40 begrenzt ist. An dem Sechskant 400 der Gewindemutter 40 ist ein im Durchmesser verringerter zylindrischer Ansatz 401 ausgebildet, der bei der Zusammenfügung von Unterteil 3a und Oberteil 3b in eine Aufnahmebohrung 34 des Oberteils 3b eintaucht. In der Aufnahmebohrung 34 sind federnde Zungen 340 angeordnet, die in der Stecklage mit Rastnasen 341 in eine, in der zylindrischen Mantelfläche des Ansatzes 401 ausgebildeten Ringnut 402 einfassen, so dass das Unterteil 3a mit dem Oberteil 3b verrastet ist, wobei gleichzeitig auch die Gewindemutter 40 in ihrer Steckposition verrastet wird.
Außerdem ist zusätzlich auf der Stirnseite des Oberteils 3b, der Aufnahmebohrung 34 gegenüberliegenden, ein Zapfen 35 mit an Schnappzungen 350 ausgebildeten Rastelementen 351 vorgesehen. In der zusammengefügten Lage von Unterteil 3a und Oberteil 3b durchdringt der Zapfen 35 eine im Unterteil 3a ausgebildete Bohrung 36 und bewirkt eine zusätzliche Verrastung der beiden Teile.
Das Bodenteil 3 kann somit bei einer Vormontage zunächst mit den Anschlussleitungen 5 sowie der Gewindemutter 40 und dem Gewindebolzen 4 versehen werden, wie es insbesondere aus Fig. 4 der Zeichnung zu entnehmen ist. Die gesamte Baueinheit kann dann, nach Ergänzung der äußeren Dichtringe, in das Gehäuse 1 eingebracht werden, wobei das Unterteil 3a an der metallenen Auflage 11 des Gehäuses 1 zur Anlage gelangt. Sodann kann die Kartusche 2 mit den gekapselt angeordneten Ventilelementen eingebracht und zusammen mit dem Bodenteil 3 von der Schraubkappe 2 gegen die Auflage 11 des Gehäuses 1 verspannt werden.
Die Befestigung der fertig montierten, mit einem Handgriff 20 betätigbaren Wasserarmatur kann dann mit dem Schraubbolzen 4 an einem Wasch- und/oder Spültisch 6 mit Hilfe der Spanneinrichtung 41, wie sie aus Fig. 1 der Zeichnung insbesondere ersichtlich ist, ausgeführt werden. Bei der Verspannung legt sich die Gewindemutter 40 mit der unteren Stirnseite an der metallenen Auflage 11 des Gehäuses 1 an und ist somit sicher gehaltert. Das Bodenteil 3, bestehend aus einem Unterteil 3a und einem Oberteil 3b, dient hierbei lediglich der Führung der Gewindemutter 40, die axiale Sicherung wird allein von der metallenen Auflage 11 des Gehäuses 1 bewerkstelligt.

## Patentansprüche

1. Wasserarmatur mit einem Gehäuse (1), das unten zum Durchlassen mindestens einer Anschlussleitung (5) und eines Gewindebolzens (4) eine Öffnung (10) aufweist, an der eine Auflage (11) ausgebildet ist, wobei
- eine im Gehäuse (1) angeordnete Kartusche (2) vorgesehen ist, die Ventilelemente enthält,
- ein im Gehäuse (1) angeordnetes, als separates Teil ausgebildetes, mit der Oberseite an der Unterseite der Kartusche (2) anliegendes, mit seinem unteren Bereich auf der Auflage (11) aufliegendes Bodenteil (3) vorgesehen ist, in dem
-- Bohrungen ausgebildet sind, in die mindestens eine Anschlussleitung (5) eingesetzt ist, und mit jeweils einem Verbindungskanal (31) von der Anschlussleitung (5) zur Kartusche (2) versehen sind,
-- ein Gewindebolzen (4) drehfest mit einem verdickten Endbereich gehalten ist, mit dem die Wasserarmatur an einem Gegenstand befestigbar ist,
**dadurch gekennzeichnet, dass** der verdickte Endbereich des Gewindebolzens (4) in einer zur Auflage (11) offenen Halteöffnung (32) angeordnet ist, wobei zur axialen Halterung der verdickte Endbereich an der Auflage (11) anliegt.

2. Wasserarmatur nach Anspruch 1, **dadurch gekennzeichnet, dass** der verdickte Endbereich als Bolzenkopf ausgebildet ist, der einstückig an dem Gewindebolzen angeformt ist.

3. Wasserarmatur nach Anspruch 1, **dadurch gekennzeichnet, dass** der verdickte Endbereich als Gewindemutter (40) ausgebildet ist, in die der Gewindebolzen (4) einschraubbar ist.

4. Wasserarmatur nach wenigstens einem der vorhergehenden Ansprüche, **dadurch gekennzeichnet, dass** der verdickte Endbereich des Gewindebolzens (4) in der Stecklage im Bodenteil (3) von einer Rasteinrichtung gehalten ist, so dass ein Herausfallen des Gewindebolzens (4) vor der Einmontage in das Gehäuse (1) ausgeschlossen ist.

5. Wasserarmatur nach wenigstens einem der vorhergehenden Ansprüche, **dadurch gekennzeichnet, dass** das Bodenteil (3) von einem Unterteil (3a) und einem Oberteil (3b) gebildet ist, wobei in dem Unterteil (3a) eine oder mehrere Anschlussleitungen (5) in jeweils eine Bohrung (30a) axial einschiebbar und mit einem Umfangsbund (50) axial sicherbar sind, während im Oberteil (3b) zu den Bohrungen (30a) entsprechende Stufenbohrungen (30b) angeordnet sind, in die beim Zusammenfügen des Unterteils (3a) mit dem Oberteil (3b) im erweiterten Bereich jeweils der Umfangsbund (50) und ein von dem Umfangsbund (50) gestützter Dichtring (51) aufgenommen ist, während das stromabwärts befindliche Ende der jeweiligen Anschlussleitung (5) von dem verengten Bereich der Stufenbohrung (30b) aufgenommen ist, und dass das verdickte Ende des Gewindebolzens (4) drehfest im Unterteil (3a) gehalten ist.

6. Wasserarmatur nach Anspruch 5, **dadurch gekennzeichnet, dass** das Unterteil (3a) mit dem Oberteil (3b) durch eine oder mehrere Rastverbindungen nach dem Zusammenstecken in der Stecklage gesichert ist, so dass das Bodenteil (3) mit einer oder mehreren Anschlussleitungen (5) und dem Gewindebolzen (4) vormontierbar ist und als eine Baugruppe in das Gehäuse (1) einsetzbar ist.

7. Wasserarmatur nach Anspruch 5 oder 6, **dadurch gekennzeichnet, dass** die Gewindemutter (40) ein Polygonprofil aufweist, das in der Stecklage drehfest von dem Unterteil (3a) gehalten ist.

8. Wasserarmatur nach Anspruch 7, **dadurch gekennzeichnet, dass** das Polygonprofil als Sechskant (400) oder als Zwölfkant ausgebildet ist.

9. Wasserarmatur nach Anspruch 7 oder 8, **dadurch gekennzeichnet, dass** die Eintauchtiefe des Polygonprofils in das Unterteil (3a) von Anschlagnasen (33) begrenzt ist.

10. Wasserarmatur nach wenigstens einem der vorhergehenden Ansprüche, **dadurch gekennzeichnet, dass** der verdickte Endbereich, also die Gewindemutter (40) oder der Bolzenkopf, im Anschluss an das Polygonprofil mit einem im Durchmesser verringerten zylindrischen Ansatz (401) versehen ist, der sich von dem Unterteil (3a) in eine Aufnahmebohrung (34) des Oberteil (3b) erstreckt und der Verrastung von Oberteil (3b) und Unterteil (3a) dient.

11. Wasserarmatur nach Anspruch 10, **dadurch gekennzeichnet, dass** in der Mantelfläche des zylindrischen Ansatzes (401) eine Ringnut (402) vorgesehen ist, in die bei zusammengestecktem Oberteil (3b) und Unterteil (3a) eine oder mehrere in der Aufnahmebohrung (34) vorstehende federnde Zungen (340) mit jeweils einer Rastnase (341) einfassen, so dass nach dem Zusammenstecken das Oberteil (3b) mit dem Unterteil (3a) verbunden ist.

12. Wasserarmatur nach wenigstens einem der vorhergehenden Ansprüche, **dadurch gekennzeichnet, dass** in der dem Gewindebolzen (4) gegenüberliegenden Hälfte des Bodenteils (3) in dem Oberteil (3b) an der Unterseite ein vorstehender Zapfen (35) mit Rastmitteln ausgebildet ist, der in der Stecklage in eine Bohrung (36) des Unterteils (3a) fasst und das Oberteil (3b) mit dem Unterteil (3a) verrastet.

13. Wasserarmatur nach Anspruch 12, **dadurch gekennzeichnet, dass** der Zapfen (35) als zylindrischer Rohrstutzen ausgebildet ist und im Wandungsbereich an federnden Schnappzungen (350) vorstehende Rastelemente (351) angeformt sind, die in der Stecklage die Bohrung (36) durchgreifen und die Verrastung von dem Oberteil (3b) und dem Unterteil (3a) bewirken.

## Claims

1. Water fitting having a housing (1) which has at the bottom an opening (10) for the passage of at least one supply pipe (5) and a threaded bolt (4), on which opening a support (11) is formed, wherein
- a cartridge (2) arranged in the housing (1) is provided, which cartridge (2) contains valve elements,
- there is provided a base member (3) arranged in the housing (1), which base member (3) is in the form of a separate member, the upper side of which rests against the underside of the cartridge (2) and the lower region of which rests on the support (11), in which base member (3)
-- there are provided bores into which at least one supply pipe (5) is inserted and which are each provided with a connecting channel (31) from the supply pipe (5) to the cartridge (2),
-- a threaded bolt (4) is held in a rotationally secure manner by means of a thickened end region, with which threaded bolt (4) the water fitting can be fastened to an object, **characterised in that** the thickened end region of the threaded bolt (4) is arranged in a retaining opening (32) which is open to the support (11), the thickened end region resting for the purposes of axial retention on the support (11).

2. Water fitting according to claim 1, **characterised in that** the thickened end region is in the form of a bolt head which is formed in one piece on the threaded bolt.

3. Water fitting according to claim 1, **characterised in that** the thickened end region is in the form of a threaded nut (40) into which the threaded bolt (4) can be screwed.

4. Water fitting according to at least one of the preceding claims, **characterised in that**, in the fitted position, the thickened end region of the threaded bolt (4) is held in the base member (3) by a snap-in device so that the threaded bolt (4) is prevented from falling out before fitting into the housing (1).

5. Water fitting according to at least one of the preceding claims, **characterised in that** the base member (3) is formed by a lower part (3a) and an upper part (3b), wherein in the lower part (3a) one or more supply pipes (5) can each be inserted axially into a bore (30a) and secured axially by means of a peripheral collar (50), while in the upper part (3b) there are arranged stepped bores (30b) corresponding to the bores (30a), into which stepped bores (30b), on joining of the lower part (3a) with the upper part (3b), there are received in the widened region in each case the peripheral collar (50) and a sealing ring (51) supported by the peripheral collar (50), while the upstream end of the respective supply pipe (5) is received by the narrowed region of the stepped bore (30b), and **in that** the thickened end of the threaded bolt (4) is held in a rotationally secure manner in the lower part (3a).

6. Water fitting according to claim 5, **characterised in that** the lower part (3a) is secured to the upper part (3b) by one or more snap-in connections after being brought together in the fitted position, so that the base member (3) having one or more supply pipes (5) and the threaded bolt (4) can be pre-assembled and inserted into the housing (1) as a subassembly.

7. Water fitting according to claim 5 or 6, **characterised in that** the threaded nut (40) has a polygonal profile which, in the fitted position, is held in a rotationally secure manner by the lower part (3a).

8. Water fitting according to claim 7, **characterised in that** the polygonal profile is in the form of a hexagon (400) or in the form of a dodecagon.

9. Water fitting according to claim 7 or 8, **characterised in that** the depth of penetration of the polygonal profile into the lower part (3a) is limited by stop noses (33).

10. Water fitting according to at least one of the preceding claims, **characterised in that** the thickened end region, that is to say the threaded nut (40) or the bolt head, is provided, following the polygonal profile, with a cylindrical projection (401) of reduced diameter which extends from the lower part (3a) into a receiving bore (34) of the upper part (3b) and serves to lock the upper part (3b) and the lower part (3a) together.

11. Water fitting according to claim 10, **characterised in that** an annular groove (402) is provided in the outer surface of the cylindrical projection (401), into which annular groove (402), when the upper part (3b) and the lower part (3a) are fitted together, there engage one or more resilient tongues (340) which project into the receiving bore (34) and each have a snap-in nose (341), so that the upper part (3b) is connected to the lower part (3a) after they have been fitted together.

12. Water fitting according to at least one of the preceding claims, **characterised in that**, in the half of the base member (3) facing the threaded bolt (4), there is formed on the underside of the upper part (3b) a projecting pin (35) having snap-in means which, in the fitted position, engages in a bore (36) in the lower part (3a) and locks the upper part (3b) to the lower part (3a).

13. Water fitting according to claim 12, **characterised in that** the pin (35) is in the form of a cylindrical pipe socket and in the wall region projecting snap-in elements (351) are formed on resilient snap-in tongues (350), which snap-in elements (351) pass through the bore (36) in the fitted position and lock the upper part (3b) to the lower part (3a).

## Revendications

1. Robinet à eau ayant un boîtier (1) qui présente, pour le passage d'au moins une conduite de raccordement (5) et d'un tenon fileté (4), une ouverture (10) le long de laquelle se trouve une portée d'appui (11), dans lequel :
- le boîtier (1) loge une cartouche (2) qui contient des éléments de soupape,
- il est prévu dans le boîtier (1) en tant que partie séparée, une pièce de fond (3) dont la face supérieure est appliquée sur la face inférieure de la cartouche (2), tandis que sa zone inférieure repose sur la portée d'appui (11), et dans cette pièce de fond (3),
- des perçages, dans lesquels est insérée au moins une conduite de raccordement (5), sont munis chacun d'un canal de liaison (31) allant de la conduite de raccordement (5) à la cartouche (2), avec également dans la pièce de fond,
- un tenon fileté (4) solidaire d'une partie d'extrémité épaissie par laquelle le robinet d'eau peut être fixé à un objet,
**caractérisé en ce que**
la zone d'extrémité épaissie du tenon fileté (4) est montée dans une ouverture de maintien (32) ouverte sur la portée d'appui (11), cette zone d'extrémité étant appliquée sur la portée d'appui (11) pour assurer le maintien axial.

2. Robinet à eau selon la revendication 1,
**caractérisé en ce que**
la zone d'extrémité épaissie est constituée par une tête de tenon qui est réalisée monobloc avec le tenon fileté.

3. Robinet à eau selon la revendication 1,
**caractérisé en ce que**
la zone d'extrémité épaissie est constituée par un écrou fileté (40) dans lequel le tenon fileté (4) peut être vissé.

4. Robinet à eau selon au moins une des revendications précédentes,
**caractérisé en ce que**
la zone d'extrémité épaissie du tenon fileté (4), quand celui-ci est emmanché dans la pièce de fond (3), est maintenue par un dispositif d'arrêt, de sorte que le tenon fileté (4) ne peut s'échapper avant son montage dans le boîtier (1).

5. Robinet à eau selon au moins une des revendications précédentes,
**caractérisé en ce que**
la e de fond (3) est composée d'une partie inférieure (3a) et d'une partie supérieure (3b), et dans la partie inférieure (3a) une ou plusieurs conduites de raccordement (5) peuvent être glissées chacune dans un trou (30a) et sécurisées axialement par un collet périphérique (50), tandis que dans la partie supérieure (3b) se trouvent des alésages étagés (30b) correspondant aux trous (30a) et dans lesquels, quand on réunit la partie inférieure (3a) à la partie supérieure (3b), sont logés dans une zone élargie, chaque fois le collet périphérique (30) et une bague d'étanchéité (51) soutenue par celui-ci, tandis que l'extrémité, située en aval de chaque conduite de raccordement (5), est logée dans la zone rétrécie de l'alésage étagé (30b), l'extrémité épaissie du tenon fileté (4) étant maintenu solidaire en rotation dans la partie inférieure (3a).

6. Robinet à eau selon la revendication 5,
**caractérisé en ce que**
la partie inférieure (3a) et la partie supérieure (3b), quand elles sont réunies ensemble en position emmanchée, sont sécurisées par une ou plusieurs liaisons d'arrêt, de sorte que la pièce de fond (3) peut être pré-assemblée avec une ou plusieurs conduites de raccordement (5) et avec le tenon fileté (4) pour être insérée sous forme de groupe constructif dans le boîtier (1).

7. Robinet à eau selon la revendication 5 ou 6,
**caractérisé en ce que**
l'écrou fileté (40) présente un profil polygonal qui, en position emmanchée, est maintenu solidaire en rotation de la partie inférieure (3a).

8. Robinet à eau selon la revendication 7,
**caractérisé en ce que**
le profil polygonal est celui d'un écrou six-pans (400) ou d'un écrou à douze pans.

9. Robinet à eau selon la revendication 7 ou 8,
**caractérisé en ce que**
la profondeur d'enfoncement du profil polygonal dans la partie inférieure (3a) est limitée par des nez de butée (33).

10. Robinet à eau selon au moins une des revendications principales,
**caractérisé en ce que**
la zone d'extrémité épaissie, c'est-à-dire l'écrou fileté (40) ou la tête de tenon, présente à la suite du profil polygonal un appendice cylindrique (401) de diamètre réduit, qui partant de la partie inférieure (3a) s'étend dans un perçage d'accueil (34) de la partie supérieure (3b) et sert à assurer le blocage de la partie supérieure (3b) et de la partie inférieure (3a).

11. Robinet à eau selon la revendication 10,
**caractérisé en ce que**
dans la surface externe de l'appendice cylindrique (4a) est creusée une rainure annulaire (402) dans laquelle sont engagées, quand la partie supérieure (3b) et la partie inférieure (3a) sont emmanchées ensemble, une ou plusieurs languettes élastiques (340) dépassant dans l'alésage d'accueil (34) et comprenant chacune un nez d'arrêt, de sorte qu'après qu'elles aient été emmanchées ensemble, la partie supérieure (3b) et la partie inférieure (3a) sont reliées.

12. Robinet à eau selon une des revendications précédentes,
**caractérisé en ce que**
dans la moitié de la pièce de fond (3) située en face des tenons filetés (4), est formé sur la pièce supérieure (3b) un tenon qui fait saillie sur la face inférieure et porte des moyens d'arrêt, de sorte que le tenon, en position emmanchée, est engagé dans un alésage (36) de la partie inférieure (3a) et bloque la partie supérieure (3b) sur la partie inférieure (3a).

13. Robinet à eau selon la revendication 12,
**caractérisé en ce que**
le tenon (35) est constitué par une tubulure cylindrique, et sur une zone de sa paroi sont formés des éléments d'accrochage (351) qui font saillie sur des languettes d'encliquetage élastiques (350) et qui, en position emmanchée, sont en prise avec l'alésage (36) et assurent le blocage de la partie supérieure (3b) et de la partie inférieure (3a).
